# EUROPEAN PATENT APPLICATION

(11) **EP 4 009 304 A1**
(43) Date of publication of application: **08.06.2022**
(21) Application number: 21211837.6
(22) Date of filing: 01.12.2021
(51) Int. Cl.: G09B 9/46, G09B 9/10, G09B 9/14, G09B 9/30, G09B 23/28

(54) **AMBULANCE HELICOPTER SIMULATOR**

(30) Priority: 03.12.2020 ES 202032631 U
(71) Applicant: Eliance Global Services S.L., 28054 Madrid (ES)
(72) Inventor: Sinisterra Aquilino, Juan Antonio, 46980 Paterna (Valencia) (ES); Garrote Moreno, José Ignacio, 28220 Majadahonda (Madrid) (ES)
(74) Representative: Ibarra Garcia, Isabel

(57) **Abstract**

The invention discloses an ambulance helicopter simulator comprising a cabin with the shape of a helicopter at a scale of 1:1 and a platform, wherein the cabin is formed by a shell made of fiber with sliding side doors, a metal inner structure to provide rigidity to the assembly, and a plurality of elements such as lights and power connections that are needed when using an ambulance helicopter. On the other hand, the platform is formed by articulated hydraulic arms on which a base rests, such that the articulated hydraulic arms are operated by a compressor and a motor to provide the platform with a vertical, rotational, and tilting movement, such that the cabin is associated with the platform by means of electrical connections and anchorings. Advantageously, since the simulator is at a scale of 1:1, it allows training skills and techniques both inside and outside same with ergonomics identical to those used in a normal operation.

## Description

### OBJECT OF THE INVENTION

The present invention relates to an ambulance helicopter simulator which, as a result of being formed by a cabin at a scale of 1:1, offers a real movement which, along with a setting, allows the users to be fully immersed in the simulation, said simulator furthermore being an effective tool for the pilot testing of devices intended for this field.

The object of the invention is to provide a simulator having the elements and devices required for health, aviation, and rescue training by means of a highly reliable simulation, making it easier for the users using said simulator the develop their skills and to perform ACRM (Aeromedical Crew Resource Management), HEMS (Helicopter Emergency Medical Service), HICAMS (Helicopter Intensive Care Advanced Medical Service), and rescue protocols and procedures.

### BACKGROUND OF THE INVENTION

Helicopter simulators applied in the health sector are known in the state of the art today.

One of said simulators consists of a simulator made up of a rectangular box with sliding doors which represent the inner volume of a BELL 412 helicopter which is in conformity with the volume defined for performing medical care tasks. This simulator is static, has patient monitoring screens, cameras and sound, as well as a smoke machine and a fire image projector therein. However, it is a static simulator that is neither an actual model nor a true reproduction, and neither does it include a real physical setting nor project any flight images. The mentioned simulator belongs to the University of Zaragoza under an agreement with the company INAER (now, Babcock MCS) and was designed by Dr. Juan Antonio Sinisterra Aquilino, one of the inventors of the present utility model. The simulator which has been described in detail is no longer in use today.

Other simulators are known, such as the one marketed by the company Babcock which is a cabin of an Agusta 109 (a helicopter which is no longer in use for this purpose) that has been refitted to perform simulation situations. It should be pointed out that, among its drawbacks, this simulator is static, i.e., without any flight movement, and constitutes a helicopter cabin that is not recommended for HEMS operations because it does not comply with the recommendations of EN 13718 for HEMS-type mission configurations. Likewise, it should be pointed out that this simulator includes a real cabin, i.e., it is not a cabin or helicopter that is reproduced in glass fiber or another material.

Another example of a simulator in this field of the art is the "*Christoph SIM"* rescue helicopter mock-up of ADAC Luftrettung located in the ADAC HEMS Academy at the Bonn-Hangelar airfield. This simulator is a mock-up made of wood and other materials which was built by Eurocopter to promote the helicopter model EC 135 and was donated to the HEMS Academy of ADAC for educational purposes. It should be highlighted that, among its drawbacks, this simulator was not conceived for educational purposes, so it presents significant limitations to that end, does not have flight image projection, does not have special aviation emergency effects, is in a free setting without other elements, and does not have any type of movement, preventing simulation by immersion.

Moreover, a fuselage of the cabin of a Sikorksy S-76 helicopter, which is a more advanced simulator in comparison to those mentioned above, can be found in Case Western Reserve University within the training facilities of the Dorothy Ebersbach Academic Center. Specifically, videos are projected onto the windows of this cabin from the outside in an attempt to simulate a real flight, with the simulator being placed on a mechanism that gives it a certain tilting movement.

The helicopter model used in the mentioned simulator is also no longer in use, so the cabin used for educational purposes does not correspond with the interior ergonomics, patient boarding, and stretcher and seat distribution that are in use today, so trainings and procedures in a real-life medical care operation cannot be reproduced.

Likewise, this simulator lacks an outdoor setting integrated in the simulation, and even though it has an tilting movement, it lacks a vertical and rotational movement.

Another significant drawback of the mentioned simulator consists of the projection of images from the outside, such that the medical care personnel inside the cabin are blinded by the light cannon from the two side windows (doors of the simulator), generating shadows and distorting colors. This situation constitutes a nuisance for the medical care operation on both sides and can change the patient's assessment given that advanced clinical simulators change the color of certain parts of the manikin according to the pathology.

As a result of the excessive cost that would be entailed by the use of a current or more modern helicopter model, many of today's simulators use a cabin originating from helicopter models or helicopters that are no longer in use and refitted for this purpose. This means that the simulation itself has little validity since the interior medical care configuration and size change in real life. The way of loading the patient and the distribution of aeronautical and medical care elements also change. All this means that the simulation is not adapted to real life and that the procedures trained in the simulator cannot be directly applied on patients in a HEMS operation. Likewise, the use of a cabin of a helicopter that is no longer in use in the simulator does not allow adaptation to new helicopter models or to the actual needs of a real simulation, since the measurements and ergonomics are not adapted to the modern models that are in use.

In view of the known simulators, the applicant of the present utility model finds the need to offer a device which incorporates a platform and a setting allowing real working conditions to be generated for a helicopter pilot and for the medical personnel enabling them to be fully immersed in the simulation and in health, aviation, and rescue training.

### DESCRIPTION OF THE INVENTION

The proposed device solves the problems described above in a completely satisfactory manner as it offers an ambulance helicopter simulator the design and configuration of which allows the professional to be fully immersed in the setting simulated by means of an effective and realistic tool.

Mainly, the simulator of the invention offers support for:
- Health, aviation, and rescue training by means of a highly accurate simulation.
- The development of skills in ACRM (Aeromedical Crew Resource Management) and of teamwork.
- The performance and validation of medical care and aviation procedures and protocols in HEMS, HICAMS & Rescue.
- The development and validation of materials, objects, and devices to be used in reproduced helicopter models.

Specifically, the present invention is formed by a cabin and a platform, both associated by electrical, wireless, and wired data connections, as well as by anchorings. The electrical connections power the electrical devices, the wireless and wired data connections interconnect the devices (flight videos with movement and other clinical and aviation elements of the simulation) and integrate data (many of these connections are in duplicate to ensure transmission). The anchorings transmit the movement of the platform to the cabin, enabling the vertical, rotational, and tilting movement thereof.

In addition to the cabin and the platform, the simulator of the invention optionally includes several settings, an observation area where the users observe the simulation in real time and where the subsequent analysis can be performed with the participants of the simulation, a platform control area, an aviation simulation unit, a clinical simulation unit, and the audiovisual unit.

Advantageously, the cabin is formed by a shell made of glass fiber or another lightweight material with the shape of a helicopter at a scale of 1:1 with sliding side doors and including both outer and inner functional physical elements for the purpose thereof. The windows of the sliding doors sides are replaced by 4K television monitors.

The use of the mentioned cabin has, among others, the following advantages:
- Since the simulator is at a scale of 1:1, it allows training skills and techniques both inside and outside same with ergonomics identical or very similar to those used in a normal operation in such missions, offering the real ergonomics of the modern models that are in use.
- For the same reason, it allows the performance of actual procedures adapted to the helicopter models it represents and customized to the needs of the service that provides the training. These procedures that are performed in the simulator can be applied to real life.
- Reliable reproduction allows greater realism in the simulation.
- It lowers the costs of the simulator since the helicopter is reproduced in glass fiber or another material, preventing the need to use a real helicopter completely or partially.
- The use of a shell made of glass fiber enables the replacement thereof with any helicopter model in a short period of time, with the possibility of reusing the rest of the elements of the invention. Therefore, the invention offers significant versatility for use in the future by adapting the helicopter cabins to the actual needs of each situation and to future designs of the industry.
- The simulator of the invention can incorporate a cabin which reproduces helicopter models that are in use and can be updated constantly with respect to future helicopter models or configurations at a reasonable cost by utilizing the rest of the elements of the invention.

Likewise, the simulator is provided with the following elements required for reproducing the desired medical care setting:
- Removable electromedicine which is secured through its corresponding anchorings and connected to the oxygen outlet and the power supply, as well as to data cables and the WiFi network.
- Medical care elements such as a stretcher with anchorings, with a space for backpacks and other elements with their corresponding fasteners.
- Simulation elements such as the clinical simulation manikin, simulated smoke machines, and simulated fire machines, the airflow caused by the turbines with the opening of the sliding side doors of the cabin to simulate the wind of the main rotor, the smell, sound and specific decibels of each helicopter model, etc.
- Control elements such as the unit for simulation through data cable and WiFi, etc.
- At least two, preferably four, cameras with movement and zoom, with two cameras being arranged close to the sliding side doors, one camera arranged on the inside of the cabin, and one camera arranged in the tail boom of the helicopter.
- Other audiovisual elements such as audio and sound systems, television screens, and other image projection systems.
- The platform through electrical connections and anchorings associated with the cabin.

The simulator also includes elements which favor the most realistic possible simulation of a mission. In this sense, the settings of the simulator have a space for patient loading and unloading ramps and for the use of objects (wrecked vehicle, a real ambulance, etc.), people (actors), and images (projected or poster images) which increase the realism of the scene and enable the training of medical care procedures and techniques.

Even on an optional basis, the mountain helicopter simulator is provided with a mountain setting by way of a climbing wall, which includes a structure (which can be of different materials) that emulates a mountain with different surfaces of different size, shape, and inclination simulating the different settings in which a rescue team may find itself in with a patient and in which it must resolve the situation. This setting can be complemented with a wind and rain effect in order to increase the complexity of the rescue and make it look like a real situation, even with a crane for carrying out the training of rescuing the patient to safe ground where he/she will board the helicopter.

The settings therefore allow the complete training of the professional, preventing many of the errors that later on affect the flight or patient transfer mission.

It therefore allows the user to carry out training in a difficult and economically prohibitive discipline, such as air rescue in a mountain. Up until now, this training is performed with real helicopter flights, significantly increasing the cost thereof.

The developed simulator also allows rescuers without air support to carry out mountain rescue training, and this is of great demand by rescue services (firefighters, civil defense, the Civil Guard), and in mountain medicine and mountain rescue courses which are imparted in Spain and in different countries.

The simulator of the invention therefore facilitates the recreation of real situations for the practice and full immersion of those professionals who wish to practice aviation simulation and clinical simulation, using a highly versatile device which reproduces a real size cabin of a helicopter model that is in use, with the sales that it entails.

### BRIEF DESCRIPTION OF THE DRAWINGS

To complete the description that is being made and for the purpose of helping to better understand the features of the invention, a set of drawings is attached as an integral part of said description in which the following is depicted in a non-limiting illustrative manner:
Figure 1 shows a perspective view of the ambulance helicopter simulator according to the preferred embodiment of the invention.
Figure 2 shows a perspective view of the platform forming the ambulance helicopter simulator according to the preferred embodiment of the invention.
Figure 3 shows a perspective view of the cabin forming the ambulance helicopter simulator according to the preferred embodiment of the invention in which the arrangement of the television screens can be seen.
Figure 4 shows a perspective view of the cabin forming the ambulance helicopter simulator according to the preferred embodiment of the invention in which the arrangement of the turbines can be seen.
Figure 5 shows a perspective view of the cabin forming the ambulance helicopter simulator according to the preferred embodiment of the invention in which the plurality of cameras arranged on the inside of the cabin can be seen.
Figure 6 shows a perspective view of the cabin forming the ambulance helicopter simulator according to the preferred embodiment of the invention in which the camera arranged on the outside of the cabin can be seen.
Figure 7 shows a perspective view of the cabin forming the ambulance helicopter simulator according to the preferred embodiment of the invention in which the clinical simulation control panel, the simulated smoke machines, the simulated fire machines, and the strobe lights are depicted.

### PREFERRED EMBODIMENT OF THE INVENTION

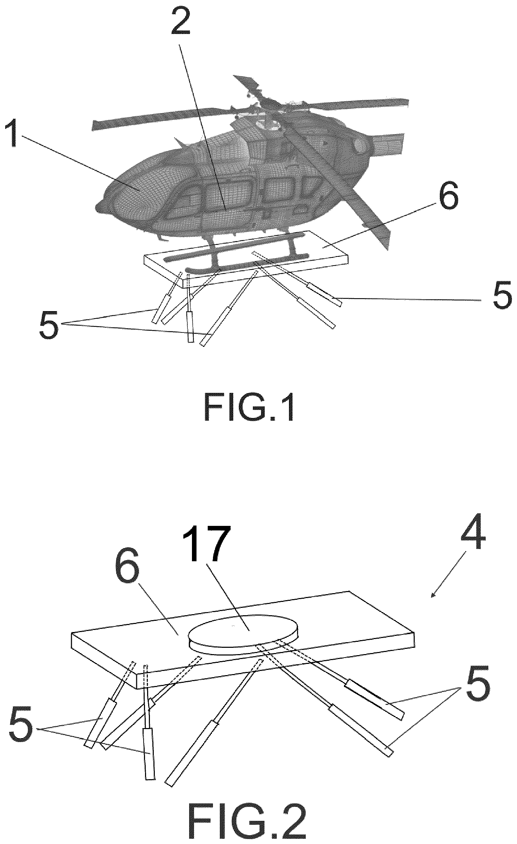

The mentioned figures show a preferred embodiment of the invention in relation to the ambulance helicopter simulator. Specifically, Figure 1 shows a depiction of the simulator formed by a cabin (1) associated with a platform (4) by means of electrical connections and anchorings providing the cabin (1) with a vertical, rotational, and tilting movement.

To that end, as can be seen in Figure 2, the platform (4) is preferably formed by a plurality of articulated hydraulic arms (5), preferably six articulated hydraulic arms (5), on which a base (6) rests, and wherein the base (6) is provided with a rotary disk (17) on which the cabin (1) is anchored, as can be seen in Figure 2. The articulated hydraulic arms (5) are therefore operated by a compressor and a motor, not depicted in the figures accompanying the present specification, to provide the platform (4) with a vertical, rotational, and tilting movement. In other words, the platform does not only enable a 360-degree rotation, rather it also transmits a movement in all the six axes, including the simulation of a take-off, evasive maneuvers, and aviation emergencies such as the loss of the tail rotor and different types of landing, including emergency landing.

Likewise, the cabin (1) of the ambulance helicopter simulator is formed by a shell made of glass fiber with the shape of a helicopter at a scale of 1:1. The cabin (1) incorporates sliding side doors integrating televisions in the space of the windows (2) and a metal inner structure to provide rigidity to the assembly.

In the preferred embodiment of the invention, the simulator includes two helicopter interiors with the same mock-up: with a reduction of the interior size by means of one or more volumes or glass fiber shell/shells, which is anchored to the inner structures of the superior helicopter model, allows obtaining the interior of the inferior helicopter of this same helicopter model (from EC 145 to EC 135, for example). The possibility of performing simulation in two different helicopter models in a quick and simple manner is achieved with the same mock-up.

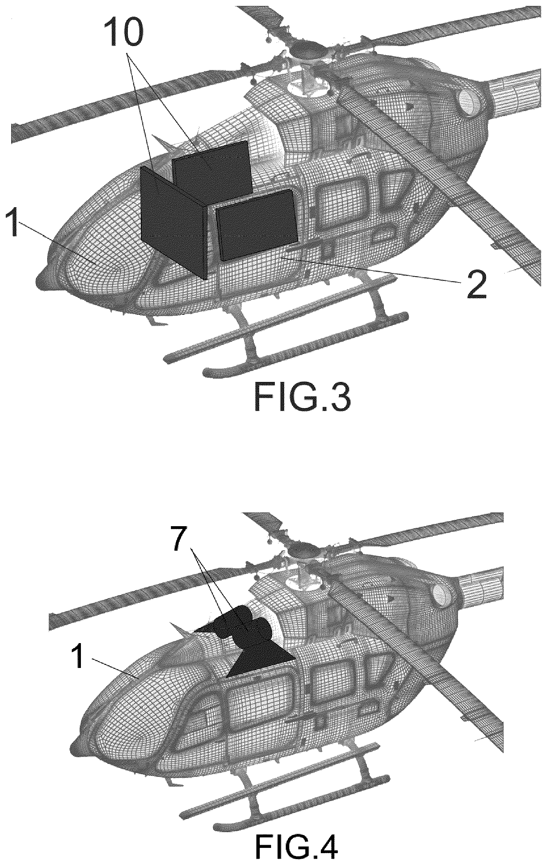

In order to provide a setting that facilities the performance and validation of medical care and aviation procedures and protocols, the cabin (1) of the simulator is provided with lights, preferably strobe lights (15), power and aviation headset connections, seats, stretcher, medicinal oxygen outlets, clinical simulation manikin, clinical simulation control panel (3), and at least two television screens (10) arranged internally covering side windows and the front of the cabin as depicted in Figure 3. Preferably, the television screens (10) are arranged in the sliding doors of the cabin of the helicopter, this arrangement being particularly significant and carrying out this arrangement has involved a special technical complexity. This brings about greater realism for the full immersion of the user.

Optionally, as can be seen in Figure 4, the simulator includes turbines (7) to provide an airflow. The turbines (7) are arranged in the frame of the sliding side doors (2) of the cabin (1) and are activated when opening the sliding side doors (2). Advantageously, the turbines (7) produce the effect of wind blowing into the cabin (1) when opening the sliding side doors (2) with the main rotor in operation. It furthermore allows the training of different procedures such as search and rescue procedure, operations with a crane, etc.

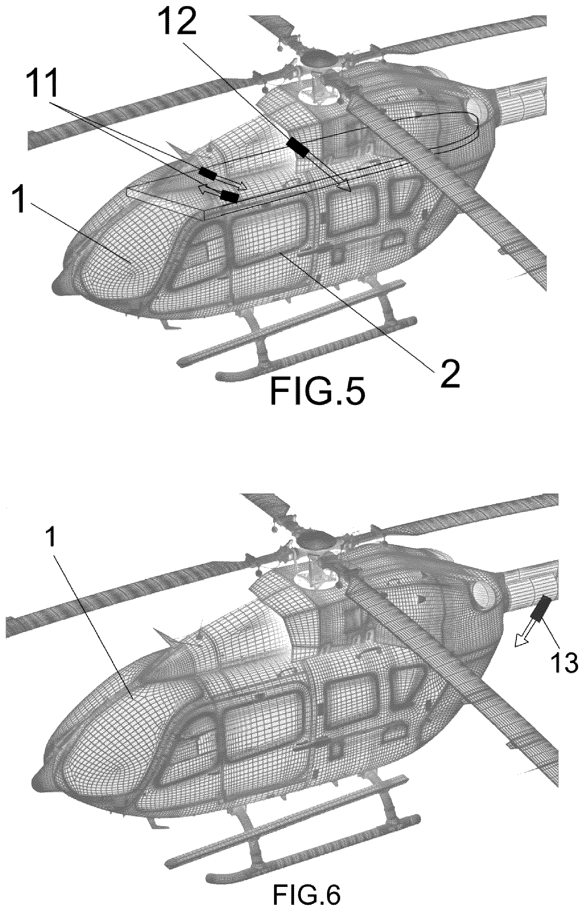

Moreover, Figures 5 and 6 depict the preferred arrangements of the cameras. Specifically, the simulator preferably includes four cameras arranged on the inside and outside of the cabin (1), which cameras can be equipped with movement and zoom, optionally each of them is associated with an ambient microphone. In this sense, as can be seen in Figure 5, the simulator of the present invention is provided with two cameras (11) arranged close to the sliding side doors (2) of the cabin (1), oriented towards the opposite doors, and one camera (12) arranged on the inside of the cabin (1).

Moreover, as can be seen in Figure 6, the simulator of the invention includes a camera (13) arranged on the outside of the cabin (1), specifically in the tail boom of the helicopter.

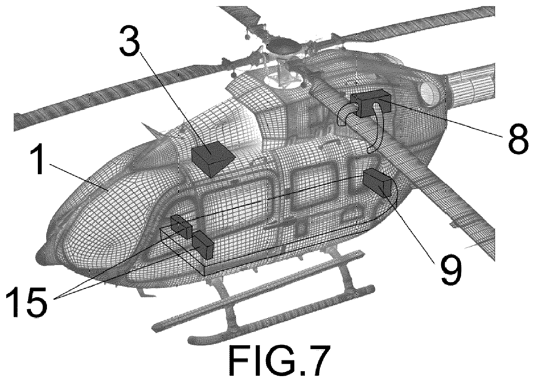

Optional elements which can be included in the ambulance helicopter simulator for improved functionality include, among others, the following:
- The cabin (1) is provided with advanced life support devices such as a portable ventilator, a portable defibrillator monitor, infusion pumps, and a secretion suction device.
- The cabin is provided with an air-conditioning machine (14) for temperature control.
- Television screens on the outside, video cameras, audio and sound systems, and image projection systems.
- First-aid backpacks with the required medical material, rescue, extrication, and immobilization material.
- Simulated smoke machines (8) and simulated fire machines (9), as depicted in Figure 7, with this location or another location.
- A dispersion device impregnated with real fuel.
- A rescue crane.
- An adult, child, and/or baby clinical simulation manikin.

Based on the foregoing, it should be pointed out that the ambulance helicopter simulator of the present invention allows the full immersion of the user, such that it facilitates complete integration with the depicted medical and aeronautical setting corresponding to a real situation.

The work environment is always under control and safe for the user who is carrying out training, where the user may interact with the rest of the elements by proximity, without any risk.

## Claims

1. An ambulance helicopter simulator comprising:
- a cabin (1) formed by a shell made of glass fiber or another lightweight material with the shape of a helicopter at a scale of 1:1 with sliding side doors (2), wherein the cabin (1) incorporates a metal inner structure to provide rigidity to the assembly, the cabin (1) being provided with lights, power and aviation headset connections, seats, stretcher, medicinal oxygen outlets, clinical simulation manikin, clinical simulation control panel (3), and at least two television screens (10) arranged internally covering the main side windows,
- platform (4) formed by a plurality of articulated hydraulic arms (5) on which a base (6) rests, such that the articulated hydraulic arms (5) are operated by a compressor and a motor to provide the platform (4) with a vertical, rotational, and tilting movement,
**characterized in that**
the cabin (1) is associated with the platform (4) by means of electrical connections and anchorings providing the cabin (1) with a vertical, rotational, and tilting movement.

2. The ambulance helicopter simulator according to claim 1, **characterized in that** the platform (4) is formed by six articulated hydraulic arms (5).

3. The ambulance helicopter simulator according to claim 1, **characterized in that** it includes turbines (7) to provide an airflow which are arranged in the frame of the sliding side doors (2) of the cabin (1).

4. The ambulance helicopter simulator according to claim 1, **characterized in that** the television screens (10) are arranged in the sliding doors of the cabin (1).

5. The ambulance helicopter simulator according to claim 1, **characterized in that** the simulator includes at least two cameras.

6. The ambulance helicopter simulator according to claim 5, **characterized in that** the simulator includes at least four cameras with movement and zoom, with two cameras (11) being arranged close to the sliding side doors (2), one camera (12) arranged on the inside of the cabin (1), and one camera (13) arranged in the tail boom of the helicopter.

7. The ambulance helicopter simulator according to claim 5 or 6, **characterized in that** each camera is associated with an ambient microphone.

8. The ambulance helicopter simulator according to claim 1, **characterized in that** the cabin (1) is provided with advanced life support devices such as a portable ventilator, a portable defibrillator monitor, infusion pumps, and a secretion suction device.

9. The ambulance helicopter simulator according to claim 1, **characterized in that** it includes television screens on the outside, video cameras, audio and sound systems, and image projection systems.

10. The ambulance helicopter simulator according to claim 1, **characterized in that** it includes first-aid backpacks with the required medical material, rescue, extrication, and immobilization material.

11. The ambulance helicopter simulator according to claim 1, **characterized in that** it includes simulated smoke machines (8) and simulated fire machines (9).

12. The ambulance helicopter simulator according to claim 1, **characterized in that** the cabin is provided with an air-conditioning machine (14) for temperature control.

13. The ambulance helicopter simulator according to claim 1, **characterized in that** the lights of the cabin are strobe lights (15).

14. The ambulance helicopter simulator according to claim 1, **characterized in that** it includes a dispersion device impregnated with real fuel.

15. The ambulance helicopter simulator according to claim 1, **characterized in that** it includes a rescue crane.

16. The ambulance helicopter simulator according to claim 1, **characterized in that** the clinical simulation manikin is an adult, child, and/or baby manikin.

17. The ambulance helicopter simulator according to claim 1, **characterized in that** it is provided with a mountain setting by way of a climbing wall.
